# EUROPÄISCHE PATENTSCHRIFT

(11) **EP 0 438 076 B1**
(45) Veröffentlichungstag und Bekanntmachung des Hinweises auf die Patenterteilung: **20.04.1994**
(21) Anmeldenummer: 91100224.4
(22) Anmeldetag: 09.01.1991
(51) Int. Cl.: B60H 1/00

(54) **Belüftungseinrichtung für Fahrzeugkabine**
Air distributing arrangement for vehicle cabins
Distributeur d'air pour cabines de véhicules

(30) Priorität: 17.01.1990 DE 4001148
(43) Veröffentlichungstag der Anmeldung: 24.07.1991
(73) Patentinhaber: DEERE & COMPANY, Moline, Illinois 61265 (US)
(72) Erfinder: Wagner, Jürgen, Dipl.-Ing., W-6100 Darmstadt (DE); Teich, Michael, Dipl.-Ing., W-6800 Mannheim 24 (DE)
(74) Vertreter: Feldmann, Bernhard

(56) Entgegenhaltungen:
- EP-A- 0 125 620
- DE-U- 7 244 048
- GB-A- 1 509 115
- US-A- 4 072 487

## Beschreibung

Die Erfindung betrifft eine Belüftungseinrichtung für die Fahrzeugkabine eines Ackerschleppers, bei der die Luft im Dachbereich von außen angesaugt, durch wenigstens einen im Bereich eines seitlichen hinteren Kabineneckpfostens im wesentlichen vertikal verlaufenden Luftkanal nach unten in den Bereich des Kabinenbodens geleitet und von dort aus unter Zwischenschaltung wenigstens eines Luftfilters verschiedenen Austrittsdüsen im Kabineninneren zugeführt wird.

Eine derartige Belüftungseinrichtung ist durch die EP-A-0 042 597 bekannt geworden. Die Frischluft wird bei dieser Anordnung durch zwei vertikal verlaufende Kanäle von einem Gebläse angesaugt. Das Gebläse ist in der Nähe des Bodens des Fahrerhauses angeordnet. Dem Gebläse ist ein Luftfilter vorgeschaltet, das die angesaugte Luft reinigt. Auch wenn dies durch die EP-A-0 042 597 nicht näher beschrieben wird, ist das Platzangebot im Fahrzeuginneren relativ klein, so daß auch das Filter relativ klein ausgelegt ist und damit einen relativ großen Luftwiderstand bildet. Das Filter ist vom Kabineninneren aus zugänglich und austauschbar. Durch die Enge der Kabine sind die Filter schlecht zugänglich, was den Austausch erschwert. Ferner können beim Austauschen des Filters Staub und ausgefilterte Teile in die Fahrzeugkabine gelangen und diese verschmutzen.

Die US-A-4,072,487 beschreibt eine Klimaeinrichtung für eine Schlepperkabine, bei der der Lufteinlaß sowie zwei Filterelemente in einem nach hinten vorstehenden Dachbereich der Kabine angeordnet sind. Die Lufteinlaßöffnung ist nach unten hin offen, so daß Schmutz und Fremdkörper, die in der Zuluft enthalten sind und sich außen an den Filterelementen ablagern, frei herunterfallen können. Die gefilterte Luft wird durch hintere Kabineneckpfosten nach unten geleitet, wo sie durch Öffnungen in eine Plenumkammer eintritt, in der sich eine Wärmetauschereinheit befindet. Wegen des nach unten offenen Lufteinlasses kann Staub und Schmutz während des Betriebs nach außen herausfallen. Dies kann insbesondere bei Schleppern mit Anhängevorrichtungen nachteilig sein, da sowohl eine Bedienungsperson als auch die Anhängevorrichtung dem herabfallenden Schmutz ausgesetzt sind. Ferner ist das Filterelement sehr hoch über dem Boden angeordnet und bei Wartungsarbeiten schlecht zugänglich.

Durch die EP-A-0 125 620 ist ein Luftfiltersystem für einen Ackerschlepper bekannt geworden, bei dem die Außenluft über Luftschlitze in einem seitlichen, im rückwärtigen Bereich der Kabine angeordneten Einzugsschacht angesaugt wird. Die Frischluft wird durch ein mit dem Einzugsschacht in der Kabine verbundenes Gebläse über einen Vorreiniger und ein Filter in eine Mischzone geleitet. In der Mischzone erfolgt eine Vermischung mit Luft aus dem Kabineninneren. Nähere Angaben über das Filter und dessen Wartung werden nicht gemacht.

Die mit der Erfindung zu lösende Aufgabe wird darin gesehen, eine Belüftungseinrichtung der eingangs genannten Art anzugeben, bei der der Einsatz von Filtern mit relativ großen Filterflächen möglich ist und die eine bequeme Zugänglichkeit und Austauschbarkeit der Filter ermöglicht, wobei eine Verunreinigung der Fahrzeugkabine vermieden wird.

Die Aufgabe wird bei einer eingangs genannten Belüftungseinrichtung erfindungsgemäß durch die kennzeichnenden Merkmale des Patentanspruchs 1 gelöst.

Hierdurch ist eine gute Zugänglichkeit und damit auch einfache Austauschbarkeit der Filter möglich. Staub und Schmutz aus dem Filtergehäuse gelangen beim Auswechseln des Filters nicht in das Kabineninnere. Bei geeigneter Ortswahl für das Filtergehäuse läßt sich ein Filterservice vom Erdboden aus durchführen. Da an der Peripherie der Kabine relativ viel Platz zur Verfügung steht, kann das Filtergehäuse relativ geräumig für die Aufnahme eines Filters mit großer Filterfläche ausgelegt werden.

Vorzugsweise verläuft im Bereich zweier seitlicher, hinterer Kabineneckpfosten je einer der im wesentlichen vertikal verlaufenden Luftkanäle mit jeweils einem sich unten daran anschließendem Filtergehäuse. Dabei ist es von Vorteil, daß die im wesentlichen vertikalen Luftkanäle gleichzeitig als Verkleidung für die Kabineneckpfosten dienen. Durch die Anordnung des Filtergehäuses seitlich hinter dem Fahrersitz werden die Sichtverhältnisse nicht, oder nur geringfügig beeinträchtigt. Durch die Anordnung des Filtergehäuses seitlich am hinteren unteren Fahrzeugkabinenteil sind die Filterelemente gut zugänglich. Die Überschlagrahmenkonstruktion der Kabine ist in ansprechbarer Weise verkleidet.

Der vom Fahrzeugäußeren aus zu öffnenden Gehäusedeckel ist vorzugsweise im wesentlichen senkrecht ausgerichtet. Es kann sich beispielsweise um einen abnehmbaren, im wesentlichen rechteckigen Deckel handeln, der durch vier Schrauben oder durch Schnellverschlüsse am Filtergehäuse befestigbar ist. Der Deckel kann jedoch auch über ein Scharnier mit dem Filtergehäuse in Verbindung stehen.

Einer bevorzugten Ausgestaltung der Erfindung zufolge ist das Luftfilterelement am Gehäusedeckel befestigbar. Die Befestigung erfolgt beispielsweise mittels Klipsen, Klemmen, Verschrauben oder Spannen. Beim Austausch des Filterelementes kann dieses auf einfache Weise gemeinsam mit dem Deckel von dem Filtergehäuse entfernt werden. Bei dieser Ausgestaltung übernimmt die Deckel-Filter-Einheit eine doppelte Dichtfunktion. Zum einen verschließt der Deckel das Filtergehäuse nach außen, zum anderen trägt das Filter eine umlaufende Dichtung, die gegen das Filtergehäuseinnere anliegt und verhindert, daß Luft unter Umgehung des Filters an diesem vorbei strömt. Die erstgenannte Dichtung ist extrem weich ausgebildet und sozusagen "schwimmend" angeordnet. Dies erlaubt eine eindeutige Dichtfunktion der zweitgenannten Dichtung.

Einer weiteren bevorzugten Ausgestaltung der Erfindung zufolge ist das Luftfilterelement im Filtergehäuse befestigbar und wird nach Abnahme des Deckels zugänglich.

Vorzugsweise kann wahlweise das Filterelement ein gewöhnliches Papierfilterelement zur Staubfilterung oder ein geeignetes Antitox-Filterelement zur Schadstoffilterung sein.

In vorteilhafter Weise ist das Filterelement im wesentlichen vertikal ausgerichtet. Die Luft tritt von oben auf einer Seite des Filters in das Filtergehäuse ein und verläßt dieses unten auf der anderen Seite des Filters. Das Filter wird dabei diagonal von oben hinten nach unten vorn durchströmt. Durch die senkrechte Ausrichtung des Filters kann das Filtergehäuse relativ schmal ausgebildet werden, so daß wenig Raum beansprucht wird. Zur Optimierung der Durchströmung und Anpassung an die Kabinenrahmenkonstruktion ist das Luftfilterelement vorzugsweise um etwa 5° nach vorn geneigt, so daß die Filteroberkante etwas weiter vorn liegt als die Filterunterkante.

Die Anordnung kann aber auch so gewählt werden, daß die Filterunterkante weiter vorn liegt; dies verbessert den "Selbstreinigungseffekt" des Filterelementes.

Vorzugsweise weist der im wesentlichen senkrecht ausgerichtete Filtergehäusedeckel eine sich nach unten erweiternde Ausbauchung auf, in der sich Staub und Schmutz sammeln kann, ohne daß das Filterelement verstopft. Dies ermöglicht eine Verlängerung der Wartungsintervalle. Ferner kann einer bevorzugten Ausgestaltung der Erfindung zufolge im unteren Bereich des Filtergehäuses oder des Gehäusedeckels eine verschließbare Öffnung vorgesehen sein, durch die Staub und Schmutz aus dem Filtergehäuse abgelassen werden kann. Die Öffnung läßt sich beispielsweise durch einen konisch ausgebildeten Stopfen, eine an einem Scharnier angelenkte Klappe oder dergleichen, der durch Federkraft gegen die Öffnung gedrückt wird, verschließen. Es ist auch möglich, unter der Öffnung eine herausziehbare Schublade anzuordnen, in die der Staub und Schmutz fällt. Dies ermöglicht eine einfache Zwischenwartung, ohne daß der Gehäusedeckel abgenommen zu werden braucht oder Werkzeug verwendet werden muß.

In weiterer Ausgestaltung der Erfindung schließt sich in Strömungsrichtung an das Filtergehäuse ein unterer, seitlicher Luftkanal an, der zu einer unterhalb des Fahrersitzes angeordneten Klimatisiereinheit führt. Die Klimatisiereinheit dient der Belüftung (Hauptgebläse), Heizung (Wärmetauscher) und gegebenenfalls Kühlung (Klimaanlage mit Verdampfer) des Kabineninneren. Sie kann auch ein Aggregat zur Beeinflussung der Luftfeuchtigkeit (Luftentfeuchter) enthalten. Diese Anordnung der Klimatisiereinheit ist platzsparend.

Neben der Einspeisung von Frischluft in die Fahrzeugkabine kann auch ein Teil der Kabinenluft in einem Umluftkreis geführt werden. Dies erspart Heiz- bzw. Kühlenergie und ermöglicht dennoch einen ausreichenden Luftstrom in der Kabine. Hierfür ist es vorteilhaft, in dem Filtergehäuse in Strömungsrichtung hinter dem Filterelement bzw. in dem sich an das Filtergehäuse anschließenden Luftkanal Lufteinlaßöffnungen für die Kabinenumluft vorzusehen. Es ist aber auch möglich, die Kabinenumluft in Strömungsrichtung gesehen vor dem Filterelement anzusaugen. Diese Lufteinlaßöffnungen sind vorzugsweise mit steuerbaren Klappen verschließbar, so daß das Verhältnis von Frischluft und Umluft einstellbar ist.

Vorzugsweise bestehen die Luftkanäle und das Filtergehäuse aus im Blasformverfahren oder Spritzgießverfahren verarbeitetem Thermoplastmaterial. Ferner weisen die den Luftdurchtrittskanal bildenden Bauteile, wie der Kanalbereich im Kabinendach, die vertikalen Luftkanäle, die Filtergehäuse und die sich hieran anschließenden Luftkanäle, ineinandersteckbare muffenförmige Anschlußstellen auf. Dies ermöglicht eine einfache Montage und gute Abdichtung der Übergänge zwischen den einzelnen Kanalabschnitten.

Weitere vorteilhafte Ausgestaltungen und Weiterbildungen der Erfindung gehen aus den Unteransprüchen hervor.

Anhand der Zeichnung, die Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: die Seitenansicht eines Ackerschleppers mit Fahrzeugkabine, welche eine erfindungsgemäße Luftfilteranordnung aufweist,

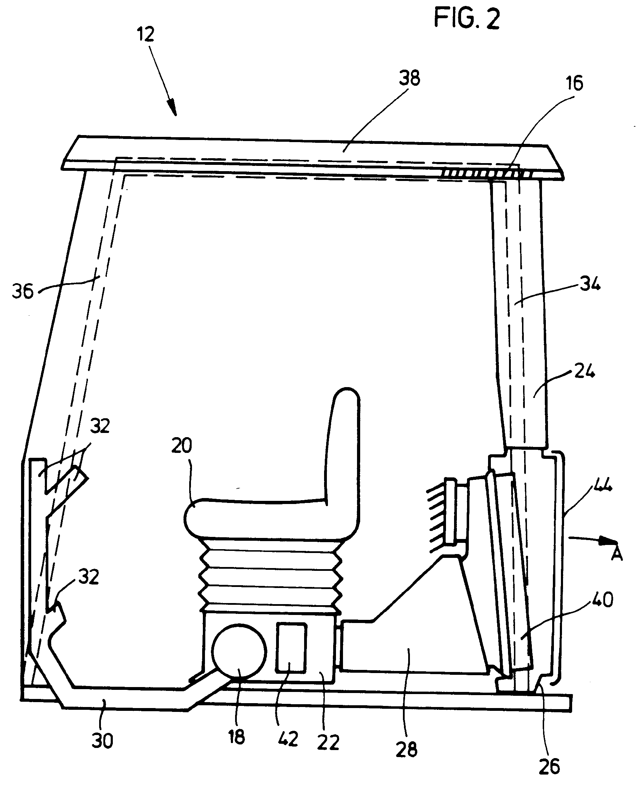

- Fig. 2: die Seitenansicht einer teilweise im Schnitt dargestellten Fahrzeugkabine gemäß Figur 1,
- Fig. 3: die Seitenansicht eines Ausschnittes der Belüftungseinrichtung gemäß einer ersten Ausgestaltung der Erfindung,
- Fig. 4: die Seitenansicht eines Ausschnittes der Belüftungseinrichtung gemäß einer zweiten Ausgestaltung der Erfindung,
- Fig. 5: die schematische Darstellung einer Fahrzeugkabine von hinten aus gesehen.

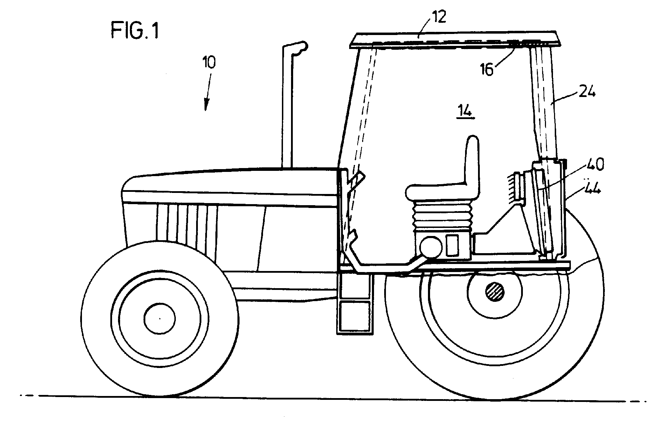

Gemäß Figur 1 weist ein Ackerschlepper 10 eine Fahrzeugkabine 12 auf, die einen Raum 14 für den Fahrer umschließt. Frischluft wird von draußen in die Fahrzeugkabine 12 durch eine Anzahl Luftschlitze 16 angesaugt, die sich im Dachbereich auf beiden Seiten der Fahrzeugkabine 12 befinden. Die Frischluft wird durch ein Hauptgebläse 18, welches sich in einer unter dem Fahrersitz 20 befindlichen Klimatisiereinheit 22 befindet, angesaugt. Hierbei gelangt die Frischluft von den Luftschlitzen 16 über vertikale Luftkanäle 24, Filtergehäuse 26, untere Luftkanäle 28 in die Klimatisiereinheit 22. Von dem Hauptgebläse 18 wird die Luft über weitere Luftkanäle 30 den verschiedenen Luftaustrittsdüsen 32 zugeführt.

Die vertikalen Luftkanäle 24 verlaufen im Bereich der seitlichen hinteren Kabineneckpfosten 34, die gemeinsam mit den vorderen Eckpfosten 36 den Kabinenrahmen bilden und das Kabinendach 38 tragen. Die vertikalen Luftkanäle 24 dienen gleichzeitig als Verkleidung für die Kabineneckpfosten 34.

Hinter dem Fahrersitz 20 schließt sich unterhalb der vertikalen Luftkanäle 24 je ein Filtergehäuse 26 an. Das Filtergehäuse 26 nimmt ein Luftfilterelement 40 auf, welches von hinten oben nach vorn unten von der Frischluft durchströmt wird. An die Filtergehäuse 26 schließt sich je ein unterer, seitlicher Luftkanal 28 an, durch den die Luft in die Klimatisiereinheit 22 gelangen kann. Die Klimatisiereinheit 22 ist unter dem Fahrersitz 20 angeordnet und nimmt ein Hauptgebläse 18 und einen Wärmetauscher 42 auf, die lediglich schematisch dargestellt wurden. die Klimatisiereinheit kann auch eine Kühlanlage sowie eine Vorrichtung zur Beeinflussung der Luftfeuchtigkeit enthalten.

Die einzelnen von der Frischluft durchströmten Komponenten, wie vertikaler Luftkanal 24, Filtergehäuse 26, unterer Luftkanal 28 und Klimatisiereinheit 22 weisen ineinandersteckbare Anschlußstücke auf, durch die eine einfache Montage und gute Abdichtung der Übergänge zwischen den einzelnen Kanalabschnitten ermöglicht wird. Diese Komponenten können beispielsweise aus im Blasformverfahren verarbeitetem Thermoplastmaterial bestehen.

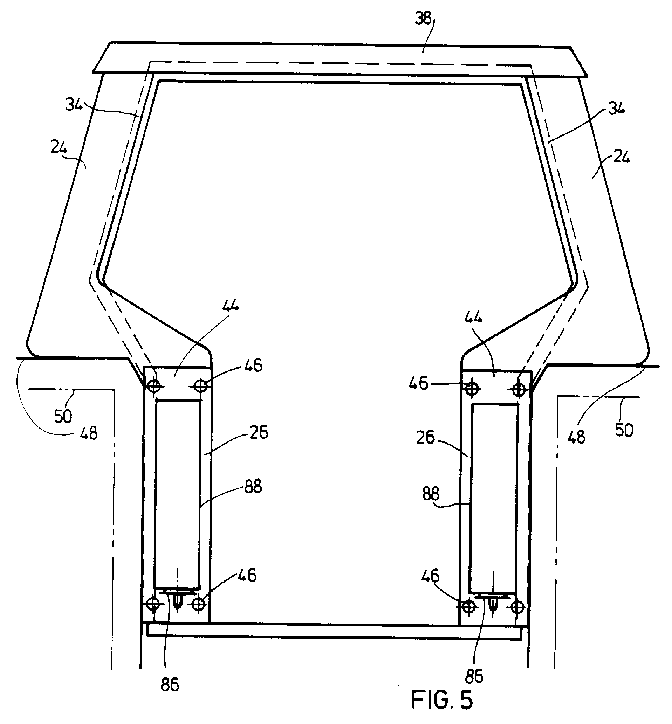

In der Rückansicht gemäß Figur 5 sind die hinteren Kabineneckpfosten 34, die den Kabinenrahmen bilden und als Überschlagschutzbügel ausgelegt sind, angedeutet. Außen an die hinteren Kabineneckpfosten 34 schmiegen sich die vertikal verlaufenden Luftkanäle 24 an, die vom Kabinendach 38 zu den Filtergehäusen 26 führen. Die Filtergehäuse 26 sind durch je einen im wesentlichen rechteckigen Deckel 44 verschlossen. Jeder Deckel ist mit vier Schrauben 46 am Filtergehäuse 26 befestigt. Die Deckel sind im wesentlichen senkrecht ausgerichtet und von der Fahrzeugrückseite aus zugänglich. Zum Filterwechsel werden die Befestigungsschrauben 46 gelöst und die Deckel 44 nach hinten in Pfeilrichtung A abgenommen.

Die Luftfiltergehäuse 26 sind auf der Innenseite der Kotschützer 48, die teilweise die Hinterräder 50 abdecken, befestigt.

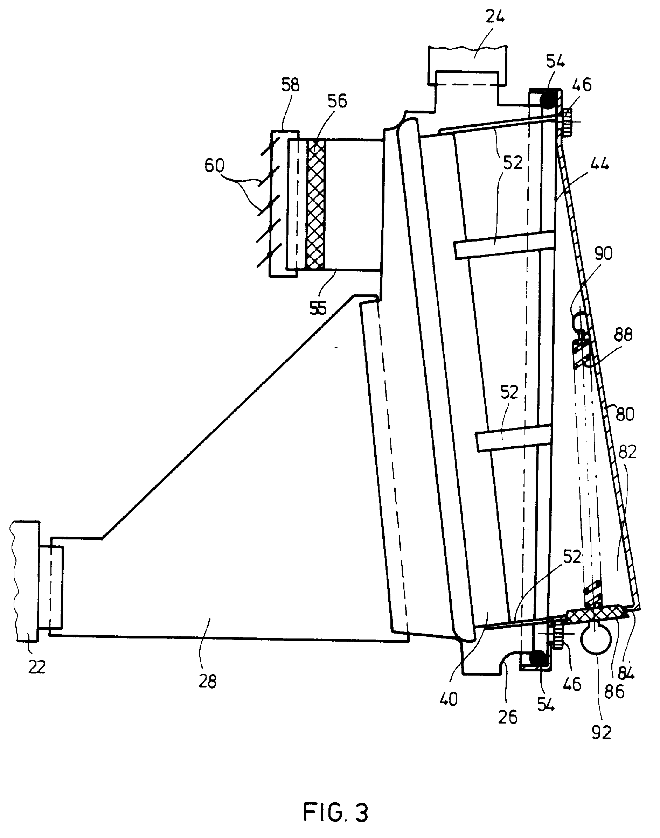

Aus Figur 3 geht eine Luftfilteranordnung hervor, bei der das Luftfilterelement 40 über Laschen 52 am Deckel 44 befestigt ist. Die Festlegung des Luftfilterelementes 40 an den Laschen 52 kann beispielsweise durch Klemmen, Verrasten oder Verschrauben erfolgen. Die in Luftströmungsrichtung stromabwärts liegende Seite des Luftfilterelementes 40 liegt mit ihrem Umfang dichtend am Filtergehäuse 26 an, so daß keine Frischluft unter Umgehung des Luftfilterelementes 40 zu der Klimatisiereinheit 22 gelangen kann. Im Bereich des Umfanges des Deckels 44 befindet sich eine Dichtung 54, durch die der Deckel 44 gegen das Filtergehäuse 26 abgedichtet wird, so daß keine Luft im Bereich des Deckels aus dem Luftkanal ein- beziehungsweise austreten kann.

Die Flanschfläche des Deckels 44 ist gemäß Figur 3 im wesentlichen senkrecht ausgerichtet. In seinem mittleren, von der umlaufenden Flanschfläche eingeschlossenen Bereich weist der Deckel 44 eine nach außen gerichtete Ausbuchtung 80 auf. Die Ausbuchtung 80 erweitert sich von oben aus, wo sie sich von der Flanschfläche abzuheben beginnt, nach unten, so daß sich unten ein Stauraum 82 ausbildet. In diesem Stauraum 82 kann sich von dem Luftfilterelement 40 zurückgehaltener Staub ansammeln, ohne daß dabei das Luftfilterelement 40 verstopft. Der Stauraum 82 ermöglicht damit längere Wartungsintervalle.

In der unteren zur Flanschfläche zurücklaufenden Seitenfläche 84 der Ausbuchtung 80 ist eine durch ein Verschluß-teil 86 verschlossene Öffnung vorgesehen. Bei dem Verschlußteil 86 handelt es sich um einen konischen, sich selbst zentrierenden Stopfen, an dessen innenliegenden Bereich ein Ende einer Spiralfeder 88 befestigt ist. Das andere Ende der Spiralfeder 88 ist an einem Haken 90 im oberen Bereich der Ausbuchtung 80 an der Innenseite des Gehäusedeckels 44 eingehängt. Die Spiralfeder 88 ist so ausgelegt, daß sie den Stopfen von außen gegen die Öffnung in der Seitenfläche 84 zieht. Außen ist an dem Stopfen eine Öse 92 angebracht, durch die sich der Stopfen von Hand gegen die Kraft der Spiralfeder 88 herunterziehen läßt, wodurch die Öffnung freigegeben wird und der Staub nach unten herausfallen kann. Da die Öffnung ins Freie mündet, gelangt der herausfallende Staub nicht ins Innere der Fahrzeugkabine 12.

Zum Öffnen des Stopfens und Entleeren des Stauraumes 82 ist damit kein Werkzeug erforderlich. Festgebackener Staub kann durch Strecken und "Rühren" mit der Spiralfeder 88 gelöst werden.

Festsitzende Verschmutzung läßt sich auch durch Herausziehen und Zurückschnappenlassen des Stopfens lösen. Die Ausbildung der Ausbuchtung 80 und der Putzklappe 86 ermöglicht einen einfachen, schnellen Zwischenservice zum Entfernen von Verschmutzung, ohne daß der Filterdeckel 44 geöffnet werden muß. Die Intervalle für einen gründlichen Filterservice lassen sich damit erheblich verlängern.

In Strömungsrichtung hinter dem Luftfilterelement 40 ist am Filtergehäuse 26 ein Stutzen 55 angeordnet, in dem sich ein Umluftfilterelement 56 befindet und dessen Stirnseite eine Klappenanordnung 58 trägt. Durch Verstellen der Klappen 60 läßt sich die Menge der Umluft einstellen, die der Frischluft beigemischt wird. Durch eine den Anforderungen entsprechende Regelung der Umluftmenge läßt sich Heiz- beziehungsweise Kühlenergie einsparen.

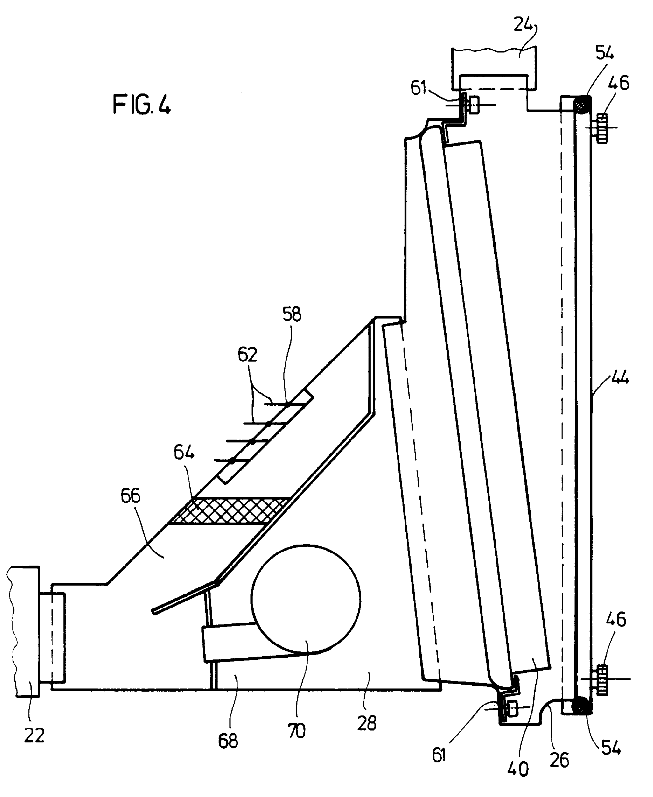

Eine weitere Luftfilteranordnung ist in Figur 4 dargestellt. Hier ist das Luftfilterelement 40 innerhalb des Filtergehäuses 26 durch Klemmen 61 befestigt. Statt der Klemmen 61 kann auch eine Befestigung durch Verspannen oder Verrasten am Filtergehäuse erfolgen. Durch Abnehmen des Deckels 44 vom Filtergehäuse 26 wird damit nicht gleichzeitig das Luftfilterelement 40 aus dem Filtergehäuse 26 herausgenommen, wie dies bei der Luftfilteranordnung gemäß Figur 3 der Fall ist. Vielmehr müssen bei der Luftfilteranordnung gemäß Figur 4 weitere Befestigungsmittel 61 gelöst werden, um das Luftfilterelement 40 herausnehmen zu können.

Auch die Beimischung von Umluft zur Frischluft erfolgt gemäß Figur 4 auf zu Figur 3 unterschiedliche Weise. Gemäß Figur 4 wird die Umluft über eine Klappenanordnung 62 und ein Umluftfilterelement 64 von dem Hauptgebläse 18 angesaugt. Im Frischluftkanal 68 befindet sich ein Zusatzgebläse 70, das strömungsmäßig vor der Einleitstelle der Umluft liegt. Das Zusatzgebläse 70 stellt sicher, daß ständig ein konstantes Volumen an Frischluft in die Fahrzeugkabine 12 gefördert wird. Durch Einstellung der Klappen der Klappenanordnung 62 läßt sich die Menge der beigemischten Umluft einstellen.

Auch wenn die Erfindung lediglich an Hand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Belüftungseinrichtung für die Fahrzeugkabine (12) eines Ackerschleppers (10), bei der die Luft im Dachbereich von außen angesaugt, durch wenigstens einen im Bereich eines seitlichen hinteren Kabineneckpfostens (34) im wesentlichen vertikal verlaufenden Luftkanal (24) nach unten in den Bereich des Kabinenbodens geleitet und von dort aus unter Zwischenschaltung wenigstens eines Luftfilterelementes (40) verschiedenen Austrittsdüsen (32) im Kabineninneren zugeführt wird, dadurch gekennzeichnet, daß sich an den unteren Bereich des im wesentlichen vertikal verlaufenden Luftkanals (24) ein Filtergehäuse (26) mit wenigstens einem vom Kabinenäußeren aus zugänglichen Luftfilterelement (40) anschließt, daß das Filtergehäuse (26) seitlich an dem Innenkotschützer (48) eines Hinterrades (50) des Fahrzeuges (10) angeordnet ist und sich im wesentlichen seitlich hinter dem Fahrersitz (20) befindet und daß das Luftfilterelement (40) über einen von der Fahrzeugrückseite aus zu öffnenden Gehäusedeckel (44) zugänglich ist.

2. Belüftungseinrichtung nach Anspruch 1, dadurch gekennzeichnet, daß im Bereich zweier seitlicher hinterer Kabineneckpfosten (34) je ein im wesentlichen vertikal verlaufender Luftkanal (24) mit sich unten daran anschließendem Filtergehäuse (26) verläuft.

3. Belüftungseinrichtung nach Anspruch 1 oder 2, dadurch gekennzeichnet, daß der Gehäusedeckel (44) von der Fahrzeugrückseite aus zugänglich und im wesentlichen senkrecht ausgerichtet ist.

4. Belüftungseinrichtung nach einem der Ansprüche 1 bis 3, dadurch gekennzeichnet, daß das Luftfilterelement (40) am Gehäusedeckel (44) befestigbar und mit diesem abnehmbar ist.

5. Belüftungseinrichtung nach einem der Ansprüche 1 bis 4, dadurch gekennzeichnet, daß das Luftfilterelement (40) im Filtergehäuse (26) befestigbar ist.

6. Belüftungseinrichtung nach einem der Ansprüche 1 bis 5, dadurch gekennzeichnet, daß das Luftfilterelement (40) zur Staubfilterung durch ein Antitoxfilterelement ersetzbar ist.

7. Belüftungseinrichtung nach einem der Ansprüche 1 bis 6, dadurch gekennzeichnet, daß das Luftfilterelement (40) im wesentlichen vertikal ausgerichtet ist und im wesentlichen diagonal von oben hinten nach unten vorn durchströmt wird.

8. Belüftungseinrichtung nach einem der Ansprüche 1 bis 7, dadurch gekennzeichnet, daß die Filterfläche des Luftfilterelementes (40) mit der Vertikalen einen Neigungswinkel von einigen Graden, vorzugsweise etwa 5° einschließt, wobei die Filteroberkante zur Kabinenvorderseite gekippt ist.

9. Belüftungseinrichtung nach einem der Ansprüche 1 bis 11, dadurch gekennzeichnet, daß ein im wesentlichen vertikal ausgerichteter Gehäusedeckel (44) eine sich nach unten erweiternde Ausbuchtung (80) zur Aufnahme von Staub und Schmutz aufweist.

10. Belüftungseinrichtung nach einem der Ansprüche 1 bis 9, dadurch gekennzeichnet, daß im unteren Bereich des Filtergehäuses (26) oder Gehäusedeckels (44) eine durch ein Verschlußteil (86) verschließbare Öffnung vorgesehen ist.

11. Belüftungseinrichtung nach Anspruch 10, dadurch gekennzeichnet, daß das Verschlußteil (86) durch eine im Filtergehäuse (26) oder am Gehäusedeckel (44) befestigte Feder gegen die Öffnung gedrückt wird, um diese zu verschließen.

12. Belüftungseinrichtung nach einem der Ansprüche 1 bis 11, dadurch gekennzeichnet, daß sich in Strömungsrichtung vor dem Luftfilterelement (40) Lufteinlaßöffnungen für die Kabinenumluft befinden.

13. Belüftungseinrichtung nach einem der Ansprüche 1 bis 12, dadurch gekennzeichnet, daß in einem sich an das Filtergehäuse (26) anschließenden Luftkanal (28) ein Zusatzgebläse (70) angeordnet ist und daß in Strömungsrichtung hinter dem Zusatzgebläse (70) sich in dem Luftkanal (28) Lufteinlaßöffnungen (58) für die Kabinenumluft befinden.

14. Belüftungseinrichtung nach einem der Ansprüche 1 bis 11, dadurch gekennzeichnet, daß in dem sich in Strömungsrichtung vor dem Luftfilterelement (40) befindlichen Luftkanal (24) ein Zusatzgebläse angeordnet ist und daß in Strömungsrichtung zwischen dem Zusatzgebläse und dem Luftfilterelement (40) sich in dem Luftkanal (24) Lufteinlaßöffunungen für die Kabinenumluft befinden.

15. Belüftungseinrichtung nach Anspruch 13, dadurch gekennzeichnet, daß die Lufteinlaßöffnungen (58) durch steuerbare Klappen (62, 60) teilweise oder ganz verschließbar sind.

16. Belüftungseinrichtung nach einem der Ansprüche 1 bis 15, dadurch gekennzeichnet, daß die Luftkanäle (24, 28) und Filtergehäuse (26) aus im Blasformverfahren oder Spritzgießverfahren verarbeitetem Thermoplastmaterial bestehen.

17. Belüftungseinrichtung nach einem der Ansprüche 1 bis 16, dadurch gekennzeichnet, daß der im wesentlichen vertikale Luftkanal (24) gleichzeitig als Verkleidung für die Kabineneckpfosten (34) dient.

18. Belüftungseinrichtung nach einem der Ansprüche 1 bis 17, dadurch gekennzeichnet, daß die den Luftdurchtrittskanal bildenden Bauteile, wie Kanalbereich im Kabinendach (38), vertikaler Luftkanal (24), Filtergehäuse (26) und sich anschließender Luftkanal (28) mit ineinandersteckbaren Anschlußstellen ausgebildet sind.

## Claims

1. A ventilation arrangement for the vehicle cab (12) of an agricultural tractor (10), in which the air is sucked in from outside in the roof region, is fed through at least one substantially vertical air channel (24) in the region of a lateral, rear cab corner pillar (34), down into the region of the cab floor and thence via at least one air filter element (40) to various outlet nozzles (32) in the interior of the cab, characterized in that a filter housing (26) with at least one air filter element (40) accessible from outside the cab is connected to the lower region of the substantially vertical air channel (24), in that the filter housing (26) is arranged on the side of the inside mudguard (48) of a rear wheel (50) of the vehicle (10) and is located substantially behind the driver seat (20), and in that the air filter element (40) is accessible through a housing cover (44) opening at the rear end of the vehicle.

2. A ventilation arrangement according to claim 1, characterized in that a substantially vertical air channel (24) with a filter housing (26) connected to the bottom thereof runs in the region of each of two lateral, rear cab corner pillars (34).

3. A ventilation arrangement according to claim 1 or 2, characterized in that the housing cover (44) is accessible from the rear end of the vehicle and extend substantially vertically.

4. A ventilation arrangement according to any of claims 1 to 3, characterized in that the air filter element (40) can be attached to the housing cover (44) and be removed therewith.

5. A ventilation arrangement according to any of claims 1 to 4, characterized in that the air filter element (40) can be fixed in the filter housing (26).

6. A ventilation arrangement according to any of claims 1 to 5, characterized in that the air filter element (40) can be replaced by an anti-toxin filter element for dust filtration.

7. A ventilation arrangement according to any of claims 1 to 6, characterized in that the air filter element (40) is disposed substantially vertically and is flowed through substantially diagonally from above rear to below front.

8. A ventilation arrangement according to any of claims 1 to 7, characterized in that the filter surface of the air filter element (40) makes an angle of a few degrees, preferably about 5°, with the vertical, with the upper edge of the filter tilted towards the front end of the cab.

9. A ventilation arrangement according to any of claims 1 to 8, characterized in that a substantially vertically disposed housing cover (44) has a downwardly widening bulge (80) for reception of dust and dirt.

10. A ventilation arrangement according to any of claims 1 to 9, characterized in that an opening closable by a closure part (86) is provided in the lower region of the filter housing (25) or the housing cover (44).

11. A ventilation arrangement according to claim 10, characterized in that the closure part (86) is pressed against the opening by a spring fixed in the filter housing (26) or on the housing cover (44), in order to close the opening.

12. A ventilation arrangement according to any of claims 1 to 11, characterized in that air inlet openings for the ambient cab air are located preceding the air filter element (40) in the direction of flow.

13. A ventilation arrangement according to any of claims 1 to 12, characterized in that an auxiliary blower (70) is arranged in an air channel (28) connected to the filter housing (26) and in that air inlet openings (58) for the ambient cab air are located in the air channel (28) following the auxiliary blower (70) in the direction of flow.

14. A ventilation arrangement according to any of claims 1 to 11, characterized in that an auxiliary blower is arranged in the air channel (24), preceding the air filter element (40) in the direction of flow, and in that air inlet openings of the ambient cab air are located in the air channel (24) between the auxiliary blower and the air filter element (40) in the direction of flow.

15. A ventilation arrangement according to claim 13, characterized in that the air inlet openings (58) can be partially or wholly closed by controllable flaps (62, 60).

16. A ventilation arrangement according to any of claims 1 to 15, characterized in that the air channels (24, 28) and filter housing (26) consist of thermoplastic material processed by the blow-moulding method or the injection moulding method.

17. A ventilation arrangement according to any of claims 1 to 16, characterized in that the substantially vertical air channel (24) serves simultaneously as cladding for the cab corner pillar (34).

18. A ventilation arrangement according to any of claims 1 to 17, characterized in that the components forming the air flow channel, such as the channel region in the cab roof (38), vertical air channel (24), filter housing (26) and attached air channel (28) are formed with plug-in connector pieces.

## Revendications

1. Système d'aération pour la cabine de conduite (12) d'un tracteur agricole, selon lequel l'air aspiré de l'extérieur dans la région du toit, est dirigé vers le bas, par au moins un conduit d'air (24) s'étendant sensiblement verticalement dans la région d'un montant d'angle arrière latéral (34) de la cabine, dans la région du plancher de la cabine, d'où il est introduit à l'intérieur de la cabine, en passant par au moins un élément filtrant (40), par différentes buses de sortie (32), **caractérisé** en ce qu'un boîtier de filtre à air (26), contenant au moins un élément filtrant (40) accessible de l'extérieur de la cabine, se raccorde à la région inférieure du conduit d'air (24) s'étendant sensiblement verticalement, en ce que le boîtier de filtre (26) est disposé latéralement sur le sabot d'aile intérieur (48) d'une roue arrière (50) du véhicule (10) et se trouve pour l'essentiel latéralement derrière le siège de conduite (20), et en ce que l'élément filtrant (40) est accessible par l'intermédiaire d'un couvercle de boîtier (44) s'ouvrant depuis l'arrière du véhicule.

2. Système d'aération selon la revendication 1, **caractérisé** en ce qu'un conduit d'air respectif (24) s'étendant sensiblement verticalement, en bas duquel se raccorde un boîtier de filtre (26), s'étend dans la région des deux montants d'angle arrière latéraux (34) de la cabine.

3. Système d'aération selon la revendication 1 ou 2, **caractérisé** en ce que le couvercle de boîtier (44) est accessible depuis l'arrière du véhicule et est orienté sensiblement verticalement.

4. Système d'aération selon l'une quelconque des revendications 1 à 3, **caractérisé** en ce que l'élément filtrant (40) peut être fixé au couvercle de boîtier (44) et déposé avec ce dernier.

5. Système d'aération selon l'une quelconque des revendications 1 à 4, **caractérisé** en ce que l'élément filtrant (40) peut être fixé dans le boîtier de filtre (26).

6. Système d'aération selon l'une quelconque des revendications 1 à 5, **caractérisé** en ce que l'élément filtrant (40) peut être remplacé par un élément filtrant antitoxique afin de filtrer les poussières.

7. Système d'aération selon l'une quelconque des revendications 1 à 6, **caractérisé** en ce que l'élément filtrant (40) est orienté sensiblement à la verticale et est traversé par le flux d'air sensiblement en diagonale, d'en haut vers l'arrière à en bas vers l'avant.

8. Système d'aération selon l'une quelconque des revendications 1 à 7, **caractérisé** en ce que la surface filtrante de l'élément filtrant (40) forme un angle de quelques degrés, de préférence d'environ 5°, avec la verticale, le bord supérieur du filtre étant incliné vers l'avant de la cabine.

9. Système d'aération selon l'une quelconque des revendications 1 à 8, **caractérisé** en ce qu'un couvercle de boîtier (44) orienté sensiblement à la verticale présente un renflement (80), s'élargissant vers le bas, pour recueillir les saletés et les poussières.

10. Système d'aération selon l'une quelconque des revendications 1 à 9, **caractérisé** en ce qu'une ouverture, pouvant être fermée par un élément d'obturation (86), est prévue dans la région inférieure du boîtier de filtre (26) ou du couvercle de boîtier (44).

11. Système d'aération selon la revendication 10, **caractérisé** en ce que l'élément d'obturation (86) est pressé contre l'ouverture, afin de la fermer, par un ressort fixé dans le boîtier de filtre (26) ou au couvercle de boîtier (44).

12. Système d'aération selon l'une quelconque des revendications 1 à 11, **caractérisé** en ce que des ouvertures d'admission d'air, pour l'air de circulation de la cabine, se trouvent avant l'élément filtrant (40) dans la direction d'écoulement.

13. Système d'aération selon l'une quelconque des revendications 1 à 12, **caractérisé** en ce qu'une soufflante supplémentaire (70) est disposée dans le conduit d'air (28) se raccordant au boîtier de filtre (26), et en ce que des ouvertures d'admission d'air (58) pour l'air de circulation de la cabine se trouvent après la soufflante supplémentaire (70), dans la direction d'écoulement, dans le conduit d'air (28).

14. Système d'aération selon l'une quelconque des revendications 1 à 11, **caractérisé** en ce qu'une soufflante supplémentaire est disposée dans le conduit d'air (24) qui se trouve avant l'élément filtrant (40) dans la direction d'écoulement, et en ce que des ouvertures d'admission d'air pour l'air de circulation de la cabine se trouvent entre la soufflante supplémentaire et l'élément filtrant (40), dans la direction d'écoulement, dans le conduit d'air (24).

15. Système d'aération selon la revendication 13, **caractérisé** en ce que les ouvertures d'admission d'air (58) peuvent être totalement ou partiellement fermées par des volets asservissables (62, 60).

16. Système d'aération selon l'une quelconque des revendications 1 à 15, **caractérisé** en ce que les conduits d'air (24, 28) et le boîtier de filtre (26) sont réalisés en matériau thermoplastique soufflé ou moulé par injection.

17. Système d'aération selon l'une quelconque des revendications 1 à 16, **caractérisé** en ce que le conduit d'air sensiblement vertical (24) sert simultanément d'habillage pour les montants d'angle (34) de la cabine.

18. Système d'aération selon l'une quelconque des revendications 1 à 17, **caractérisé** en ce que les éléments constituant la canalisation de passage d'air, tels que la région de canalisation dans le toit (38) de la cabine, le conduit d'air vertical (24), le boîtier de filtre (26) et le conduit d'air (28) se raccordant au boîtier, sont pourvus de raccords emboîtables.
